# EUROPÄISCHE PATENTSCHRIFT

(11) **EP 1 964 775 B1**
(45) Veröffentlichungstag und Bekanntmachung des Hinweises auf die Patenterteilung: **16.04.2014**
(21) Anmeldenummer: 08003811.0
(22) Anmeldetag: 29.02.2008
(51) Int. Cl.: B64D 13/00, F24F 13/04

(54) **Mischvorrichtung für Flugzeugklimaanlage**
Mixing device for aircraft air-conditioning system
Dispositif de mélange pour installation de climatisation d'avion

(30) Priorität: 02.03.2007 DE 102007010268
(43) Veröffentlichungstag der Anmeldung: 03.09.2008
(73) Patentinhaber: Liebherr-Aerospace Lindenberg GmbH, 88161 Lindenberg (DE)
(72) Erfinder: Baldauf, Georg, 88161 Lindenberg (DE)
(74) Vertreter: Laufhütte, Dieter

(56) Entgegenhaltungen:
- EP-A1- 0 260 736
- WO-A1-96/25329
- FR-A- 1 281 715
- US-A- 2 628 482
- US-A1- 2005 061 913

## Beschreibung

Die Erfindung betrifft eine Mischvorrichtung für eine Flugzeugklimaanlage mit einer Zuführleitung für Frischluft von der Klimaanlage, mit einer zweiten Zuführleitung für zurückgeführte Luft aus einem bedruckten Bereich des Flugzeugs und mit einer Abführleitung zur Zuführung gemischter Luft in den bedruckten Bereich des Flugzeugs.

Flugzeugklimaanlagen dienen zur Bereitstellung von klimatisierter Luft für die verschiedenen Bereich des Flugzeuges, beispielsweise für die Flugzeugkabine oder für das Cockpit.

Die Erfindung betrifft nun im speziellen ein Bauteil zur Mischung und/oder Aufteilung verschiedener Luftströme. Dabei wird Frischluft von der Klimaanlage mit Luft aus der Flugzeugkabine gemischt und wieder über ein Verteilsystem der Kabine zugeführt.

Unter normalen Umständen ergibt sich das Problem, dass sämtliche Bauteile, die in die Strömung ragen unter Betriebsbedingungen, in denen die Luft sehr kalt und mit Feuchte gesättigt ist, vereisen.

Um dieses Problem zu lösen, ist es bereits aus der U.S. 6,971,607 B2 bekannt geworden, eine erste Zuführleitung für Frischluft von der Klimaanlage in ihrem Endbereich mit einer zweiten Zuführleitung für zurückgeführte Luft aus der Flugzeugkabine zu umschließen, wobei beide Zuführleitungen in eine Abführleitung zur Zuführung gemischter Luft in die Flugzeugkabine münden. Damit umgibt vergleichsweise warme zurückgeführte Luft aus der Flugzeugkabine die kalte aus der Klimaanlage strömende Frischluft, so dass Vereisungen aufgrund des Wärmeübergangs von der Warmluft verhindert werden können. Von der ersten Zuführleitung für Frischluft von der Klimaanlage zweigt noch die Abführleitung zur Zuführung von Frischluft in das Cockpit ab. Hierdurch ergibt sich ein sehr komplexes Bauteil für die Mischkammer.

Bereits aus der nicht vorveröffentlichten deutschen Patentanmeldung 10 2007 002 138.2 ist eine Mischvorrichtung für Flugzeugklimaanlagen bekannt, die aus im Strömungsquerschnitt übereinander angeordneten Taschen besteht, die teilweise einen freien Querschnitt haben und teilweise eine diagonale Trennwand aufweisen.

Die Vormischung von kalter Frischluft aus der Klimaanlage mit warmer Umluft aus der Kabine erfolgt, wie anhand der Figur 1 und im Dokument US 2 628 482 dargestellt ist, konventionell bislang im unbedruckten Bereich im Flugzeug. Dazu wird die warme Umluft aus der Kabine durch den sogenannten Druckspant in den unbedruckten Bereich geführt. Die gemischte, eisfreie Luft wird über eine Rückschlagklappe wieder in die Kabine geführt. Zur Erhaltung des Kabinendrucks im Fehlerfall, d. h. beispielsweise bei Bruch einer Leitung im unbedruckten Bereich, wird die Umluftleitung im Druckspant durch ein weiteres Sicherheitsventil verschlossen. In dieser Ausführungsvariante ist die Rückschlagklappe dem Mischer nachgeschaltet, so dass die Rückschlagklappe mit im Vergleich zur kalten Frischluft wärmerer Mischluft beaufschlagt wird und somit eisfrei bleibt.

Allerdings führt diese zuvor beschriebene Lösung zu einem recht komplexen Aufbau, da im Druckspant zum einen ein Sicherheitsventil und zum anderen eine Rückschlagklappe als eigene Bauteile vorgesehen werden müssen.

Aufgabe der vorliegenden Erfindung ist es, eine gattungsgemäße Flugzeugklimaanlage derart weiterzubilden, dass dies mit weniger Bauteilen und dadurch kostengünstiger und leichter ausgeführt werden kann.

Erfindungsgemäß wird diese Aufgabe durch die Kombination der Merkmale des Anspruchs 1 gelöst. Demnach wird eine Mischvorrichtung für eine Flugzeugklimaanlage mit einer Zuführleitung für Frischluft von der Klimaanlage, mit einer zweiten Zuführleitung für zugeführte Luft aus einem bedruckten Bereich des Flugzeugs und mit einer Abführleitung zur Zuführung gemischter Luft in den bedruckten Bereich des Flugzeugs an die Hand gegeben, in der ein Rückschlagventil integriert ist.

Aufgrund dieser erfindungsgemäßen Lösung ist ein kompakter, platzsparender Aufbau möglich, da die gesonderte Ausführung der Rückschlagklappe mit ihrem bislang im Druckspant anzuordnenden Gehäuse entfällt. Des weiteren braucht in dem bedruckten Bereich des Flugzeugs, d. h. der Flugzeugkabine, die im Mischer zugeführte Umluft nicht mehr mittels einer Rohrleitung und einem Sicherheitsventil in den unbedruckten Bereich des Flugzeugs geleitet werden. Gerade der Wegfall von zusätzlichen Rohrleitungen reduziert die Druckverluste im gesamten Leitungssystem deutlich, so dass der entsprechende Umluftventilator mit geringerer Leistung ausgelegt werden kann. Der Wegfall des Sicherheitsventils und der zusätzlichen Rohrleitung führt zu einer merklichen Gewichtseinsparung.

Besondere Ausgestaltungen ergeben sich aus den sich an den Hauptanspruch anschließenden Unteransprüchen.

Gemäß einer vorteilhaften Ausgestaltung der Erfindung kann die Mischvorrichtung entsprechend der Gestaltung nach der nicht vorveröffentlichten DE 10 2007 002 138.2 aus im Strömungsquerschnitt übereinander angeordneten Taschen bestehen, die zum einen Teil einen freien Querschnitt aufweisen, um die Frischluft von der Klimaanlage in die Abführleitung zur Zuführung von gemischter Luft in den bedruckten Bereich des Flugzeugs zu leiten und die zum anderen Teil eine diagonale Trennwand aufweisen, um zurückgeführte Luft aus dem bedruckten Bereich des Flugzeugs in die Abführleitung zur Zuführung von gemischter Luft in den bedruckten Bereich des Flugzeugs zu leiten.

Demnach können unterschiedlich aufgebaute Taschen in mehreren Lagen abwechselnd übereinander angeordnet sein. Hier sind in einer Mischvorrichtung beispielsweise 10 bis 20 Taschen übereinander anzuordnen.

Vorteilhaft kann aus der Klimaanlage auch heiße Prozeßluft abgezweigt werden und der Mischvorrichtung zugeführt werden, um dadurch ein Vereisen mit noch größerer Sicherheit zu verhindern.

Vorteilhaft können die Taschen eine im wesentlichen dreieckige Grundfläche aufweisen.

Besonders vorteilhaft ist das Rückschlagventil dadurch gebildet, dass die durch die Taschenzwischenräume gebildeten Auslaßschlitze für die aus der Klimaanlage stammende kalte Frischluft über Klappen verschließbar sind.

Die Klappen können dabei am Rand der Auslaßschlitze schwenkbar nach unten hängend angelenkt sein. Dies ermöglicht es, dass die Klappen in der warmen Umluftströmung geöffnet sind und somit eisfrei bleiben. Erst im Fehlerfall wird der kalte Frischluftpfad im Mischer durch die zufallenden Klappen verschlossen.

Weitere Merkmale, Einzelheiten und Vorteile der Erfindung werden anhand eines in der Zeichnung dargestellten Ausführungsbeispiels näher erläutert. Es zeigen:
- Figur 1:: eine Schemadarstellung der Einbausituation des Mischers und der Prozessströme im Flugzeug entsprechend dem Stand der Technik,
- Figur 2:: das Schema gemäß Figur 1 nach der erfindungsgemäßen Lösung,
- Figur 3:: eine perspektivische Ansicht der erfindungsgemäßen Mischvorrichtung,
- Figur 4:: eine Darstellung entlang der Schnittlinie B-B entsprechend Figur 5,
- Figur 5:: eine Schnittdarstellung entsprechend der Schnittlinie A-A gemäß der Figur 4 in einer ersten Betriebsstellung und
- Figur 6:: eine Darstellung entsprechend Figur 5 in einer zweiten Betriebsstellung.

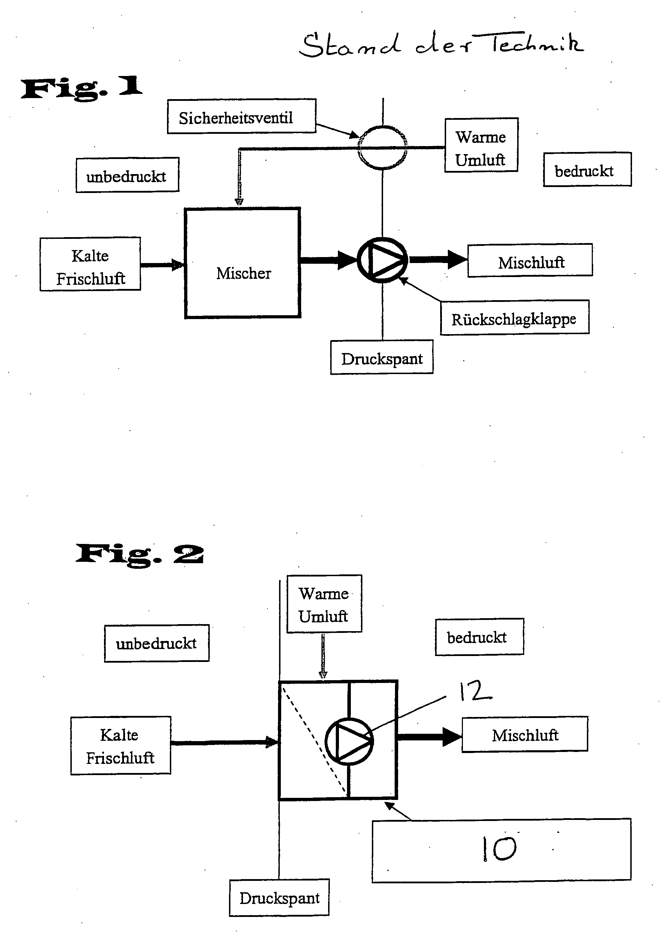

Anhand der Figur 2 ist die Anordnung einer Mischvorrichtung 10 dargestellt, die eine integrierte Rückschlagklappe 12 aufweist. Die Mischvorrichtung 10 ist hier im bedruckten Bereich des nicht näher dargestellten Flugzeugs angeordnet. Aus dem unbedruckten Bereich wird kalte Frischluft der Mischvorrichtung 10 zugeführt. Aus dem bedruckten Bereich wird warme Umluft beispielsweise auch aus der Flugzeugkabine der Mischvorrichtung innerhalb des bedruckten Bereichs zugeführt und mit der kalten Frischluft gemischt. Die entsprechende Mischluft tritt ebenfalls im bedruckten Bereich aus der Mischvorrichtung 10 aus. Das gemäß der Erfindung in der Mischvorrichtung 10 angeordnete Rückschlagventil 12 verhindert den Druckabfall im bedruckten Bereich, wenn im unbedruckten Bereich eine Leitung bricht oder Leck geschlagen wird.

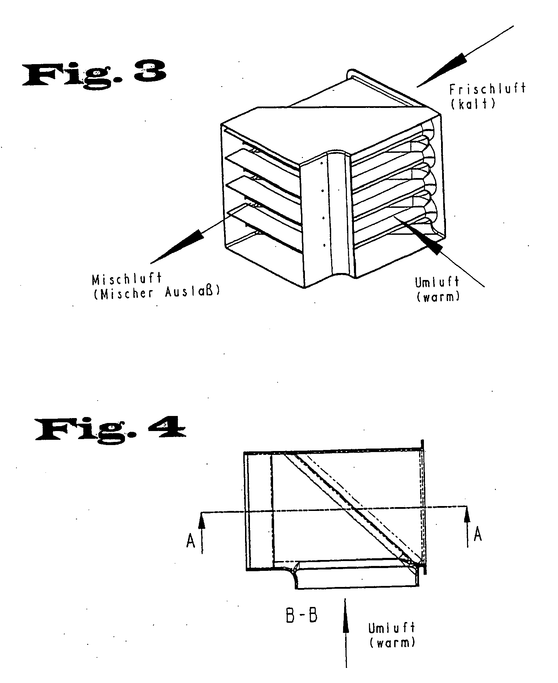

Anhand der Figuren 3 bis 6 wird eine konstruktive Ausgestaltung der erfindungsgemäßen Mischvorrichtung gezeigt. Diese entspricht im wesentlichen dem Aufbau der DE 10 2007 002 138.2 der gleichen Anmelderin, auf die ergänzend Bezug genommen wird.

Die Mischvorrichtung 10 besteht hier aus übereinander angeordneten im wesentlichen dreieckig ausgeführten Taschen 20, die im Strömungsquerschnitt des im wesentlichen kastenförmigen Mischers 10 unter Bildung von Zwischenräumen 22 angeordnet sind. Die Funktionen der Taschen 20 besteht darin, dass die aus dem bedruckten Bereich, d. h. der Flugzeugkabine eintretende warme Umluft um 90° umgelenkt wird und aus dem Mischluftauslass 14 als Teil der Mischluft wieder austritt. Am Mischluftauslass 14 mischt sich diese um 90° umgeleitete Umluft mit der durch die Mischvorrichtung 10 im Bereich der Zwischenräume 22 zwischen den Taschen 20 durchströmenden Frischluft.

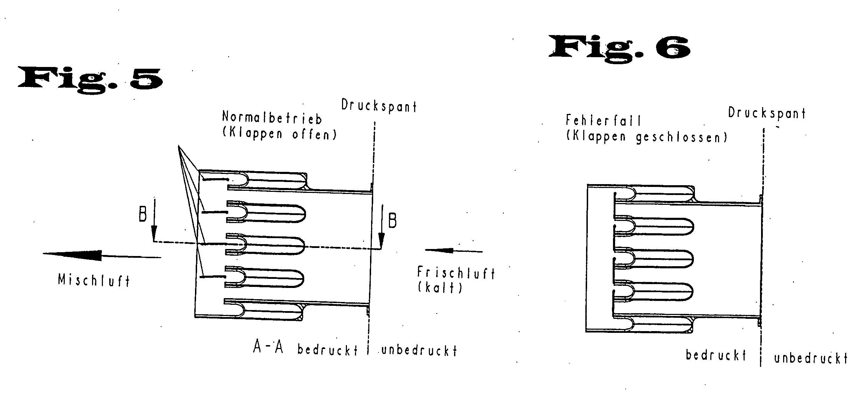

In der Schnittdarstellung gemäß Figur 4 ist die im wesentlichen dreieckige Tasche 20 mit ihrer Rückwand 24 dargestellt. Durch die entsprechenden Pfeile ist der Umluftstrom bzw. der Frischluftstrom gekennzeichnet. Aus der Schnittdarstellung A-A in Figur 5 ergibt sich, dass als Rückschlagklappe 12 einzelne Klappen 26 im Bereich der Zwischenräume zwischen den Taschen 20 angeordnet ist. Durch diese Zwischenräume 22 strömt, wie zuvor ausgeführt, die aus dem unbedruckten Bereich stammende kalte Frischluft. Sollte nun ein Leck der Frischluftleitung im unbedruckten Teil des Flugzeugs auftreten, fallen die Klappen, die an den entsprechenden Taschen 20 angelenkt sind, aufgrund ihrer Schwerkraft nach unten und verschließen die Durchtrittsschlitze 22, die die Verbindung zwischen dem unbedruckten und dem bedruckten Teil darstellen. Auf diese Weise bilden diese Klappen, die in Figur 6 in geschlossener Stellung gezeigt sind, ein einfach aufgebautes Rückschlagventil.

Da die Rückschlagklappen 26 in den warmen Umluftschlitzen gelagert sind und sich beim Betrieb der Mischvorrichtung in der warmen Umluftströmung ausrichten, bleiben sie eisfrei. Erst im Fehlerfall wird der kalte Frischluftpfad im Bereich der Schlitze 22 in der Mischvorrichtung 10 durch die zufallenden Rückschlagklappen 26 verschlossen. Die entsprechende Anordnung der Rückschlagklappen 26 im Mischer bietet folgende Vorteile:
- vereisungsrobuste Konstruktion der Rückschlagklappen durch Beheizung der Klappen mit warmer Umluft;
- redundantes System durch die Verwendung mehrerer Klappen, das bedeutet, dass bei Versagen von einer Klappe die Gesamtfunktion immer noch teilweise gegeben ist;
- vereinfachtes, platzsparendes und kostengünstiges Leitungssystem.

Im hier vorliegenden Ausführungsbeispiel sind vier Klappen gezeigt. Es können aber auch andere Ausführungsformen mit weniger Klappen, beispielsweise einer oder zwei Klappen oder auch mehr Klappen im Rahmen der vorliegenden Erfindung eingesetzt werden.

Im hier vorliegenden Ausführungsbeispiel ist ein Frischluftanschluß gezeigt. Statt des einen Frischluftanschlusses können aber auch zwei oder mehr Anschlüsse vorgesehen sein. In gleicher Weise können statt dem hier dargestellten einen Umluftanschluss auch zwei oder mehr Anschlüsse für die Umluft vorgesehen sein. Schließlich können zusätzliche Anschlüsse zum Abgreifen von Frischluft vorhanden sein. Auch können die Klappen 26 nicht nur mit Umluft, sondern auch noch mit in hier nicht näher dargestellten Art und Weise zugeführter heißer Frischluft, d. h. sogenannter Trimmluft, aus der Klimaanlage beheizt werden.

## Patentansprüche

1. Flugzeug aufweisend einen bedruckten Bereich, eine Klimaanlage mit einer Mischvorrichtung (10), die eine Zuführleitung für Frischluft von der Klimaanlage, eine zweite Zuführleitung für zurückgeführte Luft aus dem bedruckten Bereich des Flugzeugs und eine Abführleitung zur Zuführung gemischter Luft in den bedruckten Bereich des Flugzeugs aufweist,
**dadurch gekennzeichnet,**
**dass** die Mischvorrichtung (10) in dem bedruckten Bereich des Flugzeugs angeordnet ist, wobei ein Rückschlagventil (26), zur Verhinderung des Druckabfalls im bedruckten Bereich, in der Mischvorrichtung (10) integriert ist, und wobei die Mischvorrichtung (10) übereinander angeordnete Taschen (20) aufweist.

2. Flugzeug nach Anspruch 1, **dadurch gekennzeichnet, dass** die Taschen (20) der Mischvorrichtung (10) im Strömungsquerschnitt übereinander angeordnet sind, wobei die Taschen (20) zum einen Teil einen freien Querschnitt aufweisen, um die Frischluft von der Klimaanlage in die Abführleitung zur Zuführung von gemischter Luft in den bedruckten Bereich des Flugzeugs zu leiten und zum anderen Teil eine diagonale Trennwand aufweisen, um zurückgeführte Luft aus dem bedruckten Bereich des Flugzeugs in die Abführleitung zur Zuführung von gemischter Luft in den bedruckten Bereich des Flugzeugs zu leiten.

3. Flugzeug nach einem der vorhergehenden Ansprüche, **dadurch gekennzeichnet, dass** die unterschiedlich aufgebauten Taschen (20) in mehreren Lagen abwechselnd übereinander angeordnet sind.

4. Flugzeug nach einem der vorhergehenden Ansprüche, **dadurch gekennzeichnet, dass** 10 bis 20 Taschen (20) übereinander angeordnet sind.

5. Flugzeug nach einem der vorhergehenden Ansprüche, **dadurch gekennzeichnet, dass** die Mischvorrichtung (10) derart ausgebildet ist, dass aus der Klimaanlage abgezweigte heiße Prozeßluft in die Mischvorrichtung (10) zuführbar ist.

6. Flugzeug nach einem der vorhergehenden Ansprüche, **dadurch gekennzeichnet, dass** die Taschen (20) eine im Wesentlichen dreieckige Grundfläche aufweisen.

7. Flugzeug nach einem der vorhergehenden Ansprüche, **dadurch gekennzeichnet, dass** die Taschen (20) aus Blech bestehen.

8. Flugzeug nach einem der vorhergehenden Ansprüche, **dadurch gekennzeichnet, dass** das Rückschlagventil (26) dadurch gebildet ist, dass durch die Taschen (20) gebildete Auslaßschlitze für die aus der Klimaanlage stammende kalte Frischluft über Klappen (12) verschließbar sind.

9. Flugzeug nach Anspruch 8, **dadurch gekennzeichnet, dass** die Klappen (12) am Rand der Auslaßschlitze schwenkbar nach unten hängend angelenkt sind.

10. Flugzeug nach einem der Ansprüche 8 oder 9, **dadurch gekennzeichnet, dass** die Klappen (12) Rückschlagklappen sind, die in warmen Umluftschlitzen gelagert sind und von der warmen Umluftströmung umströmt werden.

11. Flugzeug nach Anspruch 10, **dadurch gekennzeichnet, dass** die Rückschlagklappen (12) zusätzlich mit Trimmluft umströmt werden.

## Claims

1. An aircraft comprising a pressurised zone and an air-conditioning system having a mixing apparatus (10) which has a supply line for fresh air from the air-conditioning system, a second supply line for returned air from the pressurised zone of the aircraft and a removal line for the supply of mixed air into the pressurised zone of the aircraft,
**characterised in that**
the mixing apparatus (10) is arranged in the pressurised zone of the aircraft, with a check valve (26) for preventing a pressure loss in the pressurised zone being integrated in the mixing apparatus (10), and with the mixing apparatus (10) having pockets (20) arranged above one another.

2. An aircraft in accordance with claim 1, **characterised in that** the pockets (20) of the mixing apparatus (10) are arranged above one another in the flow cross-section, with the pockets (20) having a free cross-section on the one part to feed the fresh air from the air-conditioning system into the removal line for supplying mixed air into the pressurised zone of the aircraft and having a diagonal partition wall on the other part to conduct returned air from the pressurised zone of the aircraft into the removal line for supplying mixed air into the pressurised zone of the aircraft.

3. An aircraft in accordance with one of the preceding claims, **characterised in that** the differently structured pockets (20) are arranged alternately in several layers above one another.

4. An aircraft in accordance with one of the preceding claims, **characterised in that** ten to twenty pockets (20) are arranged above one another.

5. An aircraft in accordance with one of the preceding claims, **characterised in that** the mixing apparatus (10) is configured such that hot process air branched off out of the air-conditioning systems can be supplied into the mixing apparatus (10).

6. An aircraft in accordance with one of the preceding claims, **characterised in that** the pockets (20) have a substantially triangular base surface.

7. An aircraft in accordance with one of the preceding claims, **characterised in that** the pockets (20) comprise sheet metal.

8. An aircraft in accordance with one of the preceding claims, **characterised in that** the check valve (26) is formed **in that** outlet slits formed by the pockets (20) for the cold fresh air originating from the air-conditioning system can be closed via flaps (12).

9. An aircraft in accordance with claim 8, **characterised in that** the flaps (12) are hinged hanging pivotably downwardly at the margin of the outlet slits.

10. An aircraft in accordance with one of the claims 8 or 9, **characterised in that** the flaps (12) are check flaps which are supported in hot circulation air slits and are flowed around by the hot circulation air flow.

11. An aircraft in accordance with claim 10, **characterised in that** the check flaps (12) are additionally flowed around by trim air.

## Revendications

1. Aéronef comportant une zone pressurisée (2), une installation de climatisation avec un dispositif mélangeur (10) qui comporte une conduite d'acheminement d'air frais venant de l'installation de climatisation, une deuxième conduite d'acheminement pour l'air renvoyé hors de la zone pressurisée de l'aéronef et une conduite d'évacuation pour acheminer l'air mélangé dans la zone pressurisée de l'aéronef,
**caractérisé en ce que**
le dispositif mélangeur (10) est disposé dans la zone pressurisée de l'aéronef, un clapet de retenue (26), destiné à empêcher une chute de pression dans la zone pressurisée, étant intégré dans le dispositif mélangeur (10), et ledit dispositif mélangeur (10) comportant des poches (20), disposées les unes au-dessus des autres.

2. Aéronef selon la revendication 1, **caractérisé en ce que** les poches (20) du dispositif mélangeur (10) sont disposées les unes au-dessus des autres dans la section transversale d'écoulement, lesdites poches (20) comportant, d'une part, une section transversale libre pour guider l'air frais depuis l'installation de climatisation vers la conduite d'évacuation destinée à acheminer l'air mélangé vers la zone pressurisée de l'aéronef, et, d'autre part, une cloison diagonale pour guider l'air renvoyé hors de la zone pressurisée de l'aéronef dans la conduite d'évacuation destinée à acheminer l'air mélangé vers la zone pressurisée de l'aéronef.

3. Aéronef selon l'une quelconque des revendications précédentes, **caractérisé en ce que** les poches (20) de structure différente sont disposées en plusieurs couches, en alternance les unes au-dessus des autres.

4. Aéronef selon l'une quelconque des revendications précédentes, **caractérisé en ce que** 10 à 20 poches (20) sont disposées les unes au-dessus des autres.

5. Aéronef selon l'une quelconque des revendications précédentes, **caractérisé en ce que** le dispositif mélangeur (10) est réalisé de telle sorte que l'air chaud du processus, dérivé de l'installation de climatisation, peut être acheminé vers le dispositif mélangeur (10).

6. Aéronef selon l'une quelconque des revendications précédentes, **caractérisé en ce que** les poches (20) comportent une surface de base sensiblement triangulaire.

7. Aéronef selon l'une quelconque des revendications précédentes, **caractérisé en ce que** les poches (20) sont réalisées en tôle.

8. Aéronef selon l'une quelconque des revendications précédentes, **caractérisé en ce que** le clapet de retenue (26) est formé par le fait que des fentes de sortie, formées par les poches (20), peuvent être obturées par des clapets (12) pour ne pas laisser passer l'air frais froid émanant de l'installation de climatisation.

9. Aéronef selon la revendication 8, **caractérisé en ce que** les clapets (12) sont articulés sur le bord des fentes de sortie de manière suspendue et pivotante vers le bas.

10. Aéronef selon la revendication 8 ou 9, **caractérisé en ce que** les clapets (12) sont des clapets de non-retour, qui sont logés dans des fentes d'air de circulation chaud et sont contournés par le flux d'air de circulation chaud.

11. Aéronef selon la revendication 10, **caractérisé en ce que** les clapets de non-retour (12) sont contournés en plus par l'air de fuite.
